# EUROPEAN PATENT SPECIFICATION

(11) **EP 2 432 838 B1**
(45) Date of publication and mention of the grant of the patent: **03.04.2013**
(21) Application number: 10718680.1
(22) Date of filing: 04.05.2010
(51) Int. Cl.: C09D 11/00, C09B 69/00, B01J 13/14, C09D 17/00

(54) **PROCESS, PIGMENT AND INK**
VERFAHREN, PIGMENT UND TINTE
PROCÉDÉ, PIGMENT, ET ENCRE

(30) Priority: 18.05.2009 GB 0908483
(43) Date of publication of application: 28.03.2012
(73) Proprietor: FUJIFILM Imaging Colorants Limited, Blackley Manchester M9 8ZS (GB)
(72) Inventor: ANNABLE, Tom, Manchester M9 8ZS (GB); BISSON, Adrian, Manchester M9 8ZS (GB); HOLBROOK, Mark, Manchester M9 8ZS (GB)
(74) Representative: Ellis, Gordon Lee
(86) International application number: PCT/GB2010/050731
(87) International publication number: WO 2010/133860

(56) References cited:
- EP-A1- 2 192 162
- WO-A1-2008/107658
- WO-A1-2009/038098
- WO-A1-2009/115831
- WO-A1-2010/010370
- JP-A- 2003 113 327
- US-B1- 6 395 805

## Description

This invention relates to a process for preparing encapsulated carbon black pigments and to the encapsulated pigments obtainable by means of the process. It also relates to inks and especially ink jet printing inks comprising these encapsulated pigments.

There are many demanding performance requirements for pigment-based printing inks and especially pigment-based ink jet printing (IJP) inks. In particular, it is desirable that pigment-based IJP inks can robustly provide prints of a high reflectance optical density (ROD) and which can maintain a high print quality. It is especially desirable that high RODs are achievable without the use of fixing agents and/or on plain (untreated) substrates (e.g. plain paper). It is also desirable to maximise the ROD from any given pigment type and loading level.

Pigment-based inks, unlike dye-based inks, are colloids/dispersions of pigment particles suspended in a carrier vehicle. Pigment particles often have an inherent tendency to agglomerate/flocculate if not adequately colloidally stabilized. Such aggregation or flocculation is particularly undesirable as it may lead to the production of oversized particulate matter which can block or impair the proper firing of the fine ink jet printer nozzles. Such blockage or impairment of the nozzle firing may translate into prints having a reduced or poor quality.

Poor quality prints may contain defects which are apparent to the unaided eye, e.g. poor resolution, missing pixels, lines, bands or areas. Desirably, the print quality should be high initially (directly after the preparation of the ink) and after extended periods of ink printing and/or ink storage. Maintaining print quality over extended printing runs tends to be especially difficult for thermal ink jet printers.

The present invention addresses, at least in part, one or more of the aforementioned technical problems. In a preferred embodiment the present invention provides inks containing encapsulated pigments which afford an improved combination of stability, print quality and ROD, especially when the ink is printed onto plain paper.

PCT patent application WO2006/064193 discloses a process for preparing an encapsulated particulate solid. However, we found that further property improvements are desirable. After extensive research and much inventive effort it has been discovered that specific combinations of certain carbon black pigments and specific epoxy cross-linking agents can provide the abovementioned desirable property improvements.

According to a first aspect of the present invention there is provided a process for preparing an encapsulated carbon black pigment comprising cross-linking a dispersant with a cross-linking agent in the presence of a carbon black pigment and a liquid medium, thereby encapsulating the carbon black pigment within the cross-linked dispersant, wherein:
a) the dispersant has one or more cross-linkable groups selected from amine, hydroxy and carboxylic acid groups or salts thereof;
b) the cross-linking agent is polyglycerol polyglycidyl ether;
c) the carbon black pigment has an average primary particle size of from 16 to 22nm and a surface area of from 140 to 220m²/g.

### Dispersant

As used herein the word dispersant refers to the dispersant compound as it is prior to cross-linking.

Preferably, the dispersant has two or more, more preferably 5 or more cross-linkable groups per molecule.

Whilst the cross-linkable groups in the dispersant may be selected from amine, hydroxy and carboxylic acid or salts thereof and including combinations thereof we have found that carboxylic acid groups or salts thereof are particularly preferred for final encapsulated carbon blacks which exhibit the highest reflectance optical density.

Accordingly, it is preferred that the dispersant has one or more carboxylic acid groups or salts thereof per molecule. More preferably two or more, and especially 5 or more carboxylic acid groups or salts thereof per molecule. It is particularly preferred that the dispersant has carboxylic acid groups or salts thereof and none of the other aforementioned cross-linkable groups.

Any ionic groups present in the dispersant may be in the form of the free acid (i.e. protonated, e.g. -CO₂H), the free base (i.e. unprotonated, e.g. -NH₂) or they may be in the form of a salt (e.g. sodium salt or acetate salt). When the dispersant has carboxylic acid groups these are preferably at least partially, more preferably completely, in the form of the salt.

The salt forms of the dispersant are preferred. Preferred salt forms (for carboxylic acid groups) include lithium, sodium, potassium, ammonium, substituted ammonium and mixtures thereof.

The preferred salt forms for amine groups include chloride, bromide, fluoride, acetate, nitrate, sulfate and phosphate.

Preferably, the dispersant has an acid value of from 30 to 300, more preferably from 50 to 200 and especially from 60 to 180mg KOH/g. The acid value is preferably established by means of titration. We have found that dispersants having lower acid values tend to provide encapsulated carbon black pigments which offer higher reflectance optical density when printed.

Preferably, the only acidic groups in the dispersant are carboxylic acid groups or salts thereof. More preferably, the only hydrophilic groups in the dispersant are carboxylic acid groups or salts thereof.

Optionally, the dispersant may have polyalkyleneoxide groups (e.g. polyethyleneoxide and/or polypropyleneoxide groups), however, it is preferred that the dispersant has less than 2% by weight, more preferably no such groups. We have found that the presence of such groups tends to reduce the reflectance optical density obtained from inks containing the final encapsulated carbon blacks.

Preferably, the dispersant comprises and more preferably is a polymer.

Preferably, the dispersant has a number average molecular weight of from 500 to 100,000, more preferably from 1,000 to 50,000 and especially from 1,000 to 35,000. The molecular weight is preferably measured by gel permeation chromatography ("GPC").

The polymeric dispersant may be natural, semi-synthetic or synthetic.

Preferably, the dispersant comprises and more preferably is a polyurethane, polyester or especially a polymer comprising the repeat units from polymerising one or more ethylenically unsaturated monomers.

The dispersant may be a combination of polymers which may be physically blended or chemically bonded together.

For polymeric dispersants the cross-linkable groups are preferably incorporated by means of polymerising monomer(s) at least one of which has at least one group selected from amine, hydroxy and carboxylic acid groups or salts thereof.

The dispersant may have a branched, graft or star structure but preferably the dispersant has a linear structure.

For polymeric dispersants the monomer repeat units may be disposed in blocks or segments, or they may have controlled repeat patterns such as alternation. More preferably, however, the polymeric dispersant has a statistical (sometimes called a random) structure.

The dispersant may be any of those disclosed in WO 2006/064193 at page 4, line 29 to page 10, line 16 which is incorporated herein by reference thereto.

### Polymers obtained by polymerising ethylenically unsaturated monomers

Ethylenically unsaturated monomers have one or more alkene (C=C) double bonds. Preferably, the ethylenically unsaturated monomers are monoethylenically unsaturated. Preferred ethylenically unsaturated monomer are styrenic and (meth)acrylate monomers.

### Dispersant composition

Preferably the dispersant comprises the repeat units from copolymerising the ethylenically unsaturated monomers in components a) and b):
a) one or more ethylenically unsaturated monomers each having one or more cross-linkable groups selected from amine, hydroxy and carboxylic acid groups or salts thereof; and
b) one or more ethylenically unsaturated monomers all having no cross-linkable groups selected from amine, hydroxy and carboxylic acid groups or salts thereof;
wherein the parts are by weight and the sum of the parts a) and b) add up to 100.

### Component a)

Preferred ethylenically unsaturated monomers having one or more amine groups or salts thereof include 2-aminoethyl methacrylate hydrochloride, 2-aminoethylacrylate, N-(3-aminopropyl)methacrylamide hydrochloride and para amino styrene. Preferred amines are primary amines

Preferred ethylenically unsaturated monomers having one or more hydroxy groups include glycerol monomethacrylate, 4-hydroxy butyl methacrylate, 2-hydroxy ethyl acrylate, 2-hydroxy ethyl methacrylate, N-(2-hydroxypropyl methacrylamide), hydroxy propyl methacrylate.

The hydroxy groups may also be readily incorporated by means of copolymerising an ethylenically unsaturated monomer having one or more latent hydroxy groups which are subsequently deprotected. For example vinyl acetate can be copolymerisated and then subsequently hydrolysed to provide the hydroxy groups.

Preferred ethenically unsaturated monomers having one or more carboxylic acid groups or salts thereof include itaconic acid, maleic acid, fumaric acid, crotonic acid, acrylic acid, beta carboxy ethyl acrylate and especially methacrylic acid.

Preferably, component a) consists only of ethylenically unsaturated monomers having one or more carboxylic acid groups or salts thereof. More preferably component a) consists exclusively of methacrylic acid.

Preferably, the dispersant is obtained by copolymerising from 1 to 30 parts, more preferably from 3 to 25 parts and especially from 7 to 20 parts by weight of component a) per 100 parts of both components a) and b).

### Component b)

Component b) comprises one or more ethylenically unsaturated monomers none of which have any amine, hydroxy or carboxylic acid groups or salts thereof.

Examples of such monomers include alky and aryl (meth) acrylates, styrenics, vinyl chloride, acrylonitrile, vinyl ethers, vinyl esters, vinyl ketones, and vinyl pyrrolidone. Of these styrenic and (meth)acrylate monomers are preferred.

Preferred (meth)acrylates are C₁₋₂₀ alkyl (meth)acrylates and benzyl (meth) acrylate. Preferred C₁₋₂₀ alkyl (meth) acrylates include 2-ethyl hexyl methacrylate, butyl methacrylate, octyl methacrylate and stearyl methacrylate.

Preferred styrenic monomers include styrene and alphamethyl styrene.

Preferably, none of the ethylenically unsaturated monomers in component b) has any hydrophilic groups. Hydrophilic groups preferably absent include sulfonic acid, phosphonic acid, mono and polyethyleneoxy, acrylamide, pyrrolidone, amine, hydroxy and carboxylic acid groups including salts thereof.

Accordingly, preferred ethylenically unsaturated monomers for component b) are hydrophobic. Preferably, all the monomer(s) in component b) have a calculated Log P of 1 or more, more preferably from 1 to 6 and especially from 2 to 6.

A review by Mannhold, R. and Dross, K. (Quant. Struct-Act. Relat. 15, 403-409, 1996) describes 14 methods for calculating Log P values of compounds and especially drugs. From this review we prefer the "fragmental methods" and especially the fragmental method implemented by ACD labs software. The calculated Log P of a monomer may be calculated using commercially available computer software, for example using the Log P DB software version 7.04 or a later version of such software (which is available from Advanced Chemistry Development Inc (ACD labs)). Any ionic or ionisable groups are calculated in their neutral (unionised) form. A higher log P value corresponds to a more hydrophobic monomer. We have found the inclusion of such hydrophobic monomers helps provide a dispersant which adsorbs well onto the carbon black pigment and which provides a high reflectance optical density when used in an ink and printed onto paper.

Preferred hydrophobic monomers for use in component b) include styrene, benzyl (meth)acrylate, 2-ethyl hexyl methacrylate and butyl (meth) acrylate.

It can sometimes be desirable to include at least one monomer having a high glass transition temperature (Tg) and at least one monomer having a low Tg into component b). By high glass transition temperature we preferably mean those monomers having a Tg of 50°C or more. By low glass transition temperature we preferably mean those monomers having a Tg of less than 50°C.

Preferred examples of high Tg monomers for component b) include styrene and methyl (meth) acrylate. Preferred examples of low Tg monomer for component b) include butyl (meth)acrylate and 2-ethyl hexyl (meth)acrylate.

Preferably, component b) is present at from 70 to 99 parts, preferably from 75 to 97 parts and especially from 80 to 93 parts by weight of component a) per 100 parts of both components a) and b).

Preferably, benzyl meth acrylate is present in component b) in at least 50 parts, more preferably in at least 60 and especially at least 70 parts by weight based on components a) and b). It is especially preferred that component b) consists exclusively of benzyl meth acrylate.

### Preferred dispersants

In view of the foregoing a preferred dispersant comprises the repeat units from copolymerising the ethylenically unsaturated monomers in components a) and b):
a) from 75 to 97 parts of one or more ethylenically unsaturated hydrophobic monomers; and
b) from 3 to 25 parts of methacrylic acid; and
wherein the parts are by weight and the sum of the parts a) and b) add up to 100.

### Dispersant characteristics

Preferably, the dispersant is soluble in the liquid medium. More preferably the dispersant is soluble in water. Solubility is preferably measured at a temperature of 25°C. Preferably, the dispersant has a solubility of at least 2%, more preferably at least 5% and especially at least 10% by weight in water. When the dispersant has ionic groups, for example carboxylic acid groups, its solubility is determined in its fully neutralised form. For example, carboxylic acid functional dispersants are first fully neutralised with potassium hydroxide prior to measuring their solubility.

Preferably, the dispersant is at least partially adsorbed onto the carbon black pigment prior to the cross-linking reaction. Preferably, the process according to the first aspect of the present invention has no other dispersant present during the cross-linking reaction other than the dispersant as defined and described above. Preferably, prior to cross-linking the dispersant is the only compound which acts to stabilise and disperse the carbon black in the liquid medium.

### Dispersant synthesis

Polymeric dispersants can be obtained by copolymerisation of the required monomer repeat units using any of the copolymerisation methods known in the art. Examples of known copolymerisation methods include condensation, urethanisation, anionic, cationic, atom transfer polymerisation, group transfer polymerisation and especially free radical polymerisation methods. In the case of polymeric dispersants obtained from the copolymerisation of ethylenically unsaturated monomers it is preferred that the monomers are copolymerised by means of an initiator, which is preferably a free radical initiator. The copolymerisation can be performed by emulsion, suspension, bulk or more preferably by solution polymerisation methods.

In some instances the dispersant may be obtained from a commercial source or it may be purified from a natural source.

### Cross-linking agent

One or more polyglycerol polyglycidyl ether cross-linking agents may be used to cross-link the dispersant.

Preferably, the polyglycerol polyglycidyl ether has a weight averaged molecular weight of from 500 to 5,000, more preferably from 500 to 3,000 and especially from 500 to 2,000.

Preferably, the polyglycerol polyglycidyl ether has on average from 3 to 6, more preferably 4 or 5 epoxy groups per molecule.

Preferably, the polyglycerol polyglycidyl ether has an effective epoxy content of from 150 to 200g per mole of epoxy groups.

Preferably, the polyglycerol polyglycidyl ether has a viscosity at 25°C of from 1,000 to 5,000mPa.s.

Preferably, the polyglycerol polyglycidyl ether is soluble in water, more preferably it is soluble as a mixture of 10 parts of said polyglycerol polyglycidyl ether and 90 parts of water at 25°C.

Preferred polyglycerol polyglycidyl ethers are available from Nagase ChemteX Corporation under the Denacol^{™} tradename. Preferred examples of which are DenaCol^{™} 521 and 512.

It is possible, though not preferred, to use other cross-linking agents in addition to the polyglycerol polyglycidyl ether cross-linking agents. For example other epoxides such as polyethylene glycol diepoxides might also be used.

Preferably, the process is such that the only cross-linking agents used are the polyglycerol polyglycidyl ether cross-linking agents.

### Carbon black pigment

The words carbon black pigment as used herein mean the pigment prior to the cross-linking reaction by which a dispersant is encapsulated around the pigment.

Preferably, the carbon black pigment has an average primary particle size of from 16 to 18nm, more preferably about 17nm. The average primary particle size is preferably established by means of transmission electron microscopy.

Preferably, the carbon black pigment has a surface area of from 180 to 220, more preferably from 190 to 210m²/g. The surface area is preferably established by means of nitrogen gas adsorption isotherm measurements.

The carbon black may be of any type provided the required primary particle size and surface area can be met. Gas blacks tend to best meet these requirements.

Preferred carbon black pigments are available from Evonik industries/Degussa under the Nipex^{™} tradename. Preferred examples of which include Nipex^{™} 170IQ or 160IQ and especially 170IQ are preferred. We have surprisingly found that by careful selection of carbon black pigments in conjunction with specific cross-linking agents leads to desirable improvements in the reflectance optical density obtained from inks containing such final encapsulated carbon black pigments.

Preferably, the carbon black pigment is not surface modified. By not being surface modified we mean that the carbon black does not have covalently attached groups which result from for example wet oxidation, ozone treatment or azo treatment.

Preferably, the carbon black pigment is not dispersible in water without the aid of a dispersant.

Directly prior to the cross-linking reaction it is preferred that the average particle size of the carbon black pigment in the liquid medium is from 30 to 500nm, more preferably from 50 to 300nm and especially from 50 to 200nm. The average particle size is preferably a volume or z-average. Preferred methods of measuring particle size include photoncorrelation spectroscopy, disc centrifuge photosedimentometry and laser light scattering. Preferably, the dispersant as described herein has been used to facilitate such small particle sizes.

Preferably, prior to the cross-linking reaction the carbon black pigment is uniformly dispersed in the liquid medium.

Preferably, the dispersant as described above has been used to disperse the carbon black pigment in the liquid medium. Preferably, no other kind of dispersant was present whilst the carbon black pigment was dispersed in the liquid medium. Examples of dispersion methods include those of relatively low energy such as mixing, stirring, blending, agitating and shaking. High energy dispersion tends be more desirable as it better reduces the average particle size of the carbon black pigment. Such high energy dispersion is often termed comminution. Preferred comminution methods include milling, ultrasonication, homogenisation and microfluidization^{™}. Of these milling and especially bead milling is particularly preferred. Preferably, the dispersion process provides the abovementioned preferred particle size for the carbon black pigment.

### Liquid medium

The term liquid medium as used herein means those liquid components present at the time when the dispersant is cross-linking with the cross-linking agent.

The liquid medium may be non-polar but is preferably polar. "Polar" liquids are generally capable of forming moderate to strong intra-molecular bonds, e.g. as described in the article entitled "A Three Dimensional Approach to Solubility" by Crowley et al in Journal of Paint Technology, Vol. 38, 1966, at page 269. Polar liquid media generally have a hydrogen bonding number of 5 or more as defined in the abovementioned article.

Examples of suitable polar liquid media include ethers, glycols, alcohols, amides and especially water. Numerous specific examples of polar liquid media are given in the book entitled "Compatibility and Solubility" by lbert Mellan (published in 1968 by Noyes Development Corporation) in Table 2.14 on pages 39-40.

Preferred polar liquid media contain up to, and including, a total of 6, 7 or 8 carbon atoms, especially C₁₋₆-alkanols. As examples of the preferred polar liquid media there may be mentioned glycols and glycol esters and ethers, e.g. ethylene glycol, 2-ethoxyethanol, 3-methoxypropylpropanol, 3-ethoxypropylpropanol; alkanols, e.g. methanol, ethanol, n-propanol, isopropanol, n-butanol and isobutanol; cyclic ethers and amides, especially cyclic amides, e.g. 2-pyrrolidone and n-methyl pyrrolidone; more especially water; and combinations thereof.

The polar liquid medium is optionally a polyol, that is to say, a liquid with two or more hydroxy groups. Preferred polyols include glycerol, alpha-omega diols and especially alpha-omega diol ethoxylates or propoxylates.

Preferably, the liquid medium is or comprises water as this liquid medium tends to be particularly suited to the provision of encapsulated carbon blacks which have high reflectance optical densities when used in ink jet printing inks. Preferably the liquid medium comprises from 1 to 100%, more preferably from 10 to 100%, especially from 30 to 90% and more especially from 50 to 85% water by weight based on all the liquid components of the liquid medium. The remainder required to add to 100% is preferably one or more organic liquids.

Preferred non-polar liquid media include non-halogenated aromatic hydrocarbons (e.g. toluene and xylene); halogenated aromatic hydrocarbons (e.g. chlorobenzene, dichlorobenzene and chlorotoluene); non-halogenated aliphatic hydrocarbons (e.g. linear and branched aliphatic hydrocarbons containing six or more carbon atoms, including fully and partially saturated), halogenated aliphatic hydrocarbons (e.g. dichloromethane, carbon tetrachloride, chloroform, trichloroethane); natural non-polar liquids (e.g. vegetable oil, sunflower oil, linseed oil, terpenes and fatty glycerides); and combinations thereof.

The liquid medium may comprise a mixture of liquids which may be polar or non-polar liquids. It is preferred that at least one component of the liquid medium is a polar liquid, more preferably all the components of the liquid medium are polar.

As stated above it is preferred that the liquid medium comprises water and one or more organic liquids. The organic liquids may be water immiscible but are preferably water-miscible.

Preferred water-miscible organic liquids for inclusion into the liquid medium include C₁₋₆-alkanols, preferably methanol, ethanol, n-propanol, isopropanol, n-butanol, sec-butanol, tert-butanol, n-pentanol, cyclopentanol and cyclohexanol; linear amides, preferably dimethylformamide or dimethylacetamide; water-miscible ethers, preferably tetrahydrofuran and dioxane; diols, preferably diols having from 2 to 12 carbon atoms, for example ethylene glycol, propylene glycol, butylene glycol, pentylene glycol, hexylene glycol and thiodiglycol and oligo- and polyalkyleneglycols, preferably diethylene glycol, triethylene glycol, polyethylene glycol and polypropylene glycol; triols, preferably glycerol and 1,2,6-hexanetriol; mono-C₁₋₄-alkyl ethers of diols, preferably mono-C₁₋₄-alkyl ethers of diols having 2 to 12 carbon atoms, especially 2-methoxyethanol, 2-(2-methoxyethoxy)ethanol, 2-(2-ethoxyethoxy)-ethanol, 2-[2-(2-methoxyethoxy) ethoxy]ethanol, 2-[2-(2-ethoxyethoxy)-ethoxy]-ethanol and ethyleneglycol monoallylether; cyclic amides, preferably 2-pyrrolidone, N-methyl-2-pyrrolidone, N-ethyl-2-pyrrolidone, caprolactam and 1,3-dimethylimidazolidone. Preferably the liquid medium comprises water and 2 or more, especially from 2 to 8, water-miscible organic liquids.

Especially preferred water-miscible organic liquids are cyclic amides, especially 2-pyrrolidone, N-methyl-pyrrolidone and N-ethyl-pyrrolidone; diols, especially 1,5-pentane diol, ethyleneglycol, thiodiglycol, diethyleneglycol and triethyleneglycol; and mono- C₁₋₄-alkyl and C₁₋₄-alkyl ethers of diols, more preferably mono- C₁₋₄-alkyl ethers of diols having 2 to 12 carbon atoms, especially 2-methoxy-2-ethoxy-2-ethoxyethanol; and glycerol.

When both water and organic liquid are present in the liquid medium the weight ratio of water to organic liquid is preferably from 99:1 to 5:95, more preferably from 95:5 to 60:40, especially from 95:5 to 80:20.

Preferably, the liquid medium is not appreciably reactive towards either the cross-linking agent or the dispersant. Some degree of reactivity is permissible provided that the cross-linking agent and the dispersant react with each other far more quickly than they react with the liquid medium. Preferably, the liquid medium does not have any amine groups as these groups tend to be particularly reactive towards epoxide cross-linking agents.

It is often preferred that the liquid medium consists of water only. In this manner dispersants having the cross-linkable groups amine, hydroxy and/or carboxylic acid groups or salts thereof may be cross-linked particularly effectively.

The liquid medium may be biphasic or multiphasic (e.g. a liquid -liquid emulsion), however, it is more preferred that the liquid medium is a homogeneous single phase liquid.

### Preferred process

The cross-linking reaction may be effected by adding the cross-linking agent (component b) to a mixture of the carbon black pigment, the dispersant and the liquid medium. In some instances the cross-linking reaction may be such that the cross-linking reaction can be performed around room temperature (10-25°C). More commonly heating is required to assist cross-linking. The temperature for the cross-linking reaction is preferably from 30-120°C, more preferably from 30-95°C and especially from 30-70°C. Catalysts for the cross-linking reaction may be added to speed the reaction.

The time required for the cross-linking reaction depends on factors including the choice of the dispersants cross-linkable groups and the addition of catalyst. A typical time for the cross-linking reaction is from 1 to 25 hours, more typically from 1 to 8 hours.

Boric acid and/or a borate salt may also be added prior to or during cross-linking so as to further improve the efficiency of cross-linking. The amount of boric acid and/or borate salt added is preferably from 0.5 to 5, more preferably 0.75 to 4 and especially 0.9 to 3 molar equivalents of the boronic acid or borate salt per mole of epoxy groups in the cross-linking agent.

Preferably, the cross-linking is performed by a process comprising mixing a composition comprising the following components in the specified proportions:
a) 30 to 99.7 parts, preferably 50 to 97 parts of the liquid medium;
b) 0.1 to 50 parts, preferably 1 to 30 parts of the carbon black pigment;
c) 0.1 to 30 parts, preferably 1 to 30 parts of the dispersant;
d) 0.001 to 30 parts, preferably 0.01 to 10 parts of the cross-linking agent;
e) 0 to 5 molar equivalents of boric acid or borate salt per mole of epoxy groups in the cross-linking agent;
wherein the parts are by weight and the sum of the parts a) + b) + c) + d) + e) = 100.

More preferably, the components a) to c) have been dispersed, especially comminuted together as hereinbefore described and preferred to provide a fine dispersion of the carbon black pigment in the liquid medium stabilised by the dispersant. The average size of the carbon black pigment particles in this dispersion is as hereinbefore described and preferred.

The final encapsulated carbon black pigment preferably has an average particle size of from 30 to 500nm, more preferably from 50 to 300nm and especially from 50 to 200nm. The average particle size is preferably a volume or z-average. Preferred methods of measuring the particle size are as hereinbefore described.

### Product obtainable by process

According to a second aspect of the present invention there is provided an encapsulated carbon black pigment obtainable by a process according to the first aspect of the present invention.

### Inks

According to a third aspect of the present invention there is provided an ink comprising a liquid vehicle and an encapsulated carbon black pigment according to the second aspect of the present invention.

The words liquid vehicle as used herein refer to the liquid components used in the composition of the final application. Thus the liquid vehicle may be suited to for example a paint, an ink and especially an ink jet printing ink. The liquid vehicle may as described and preferred for the liquid medium. For many inks it is preferred that the liquid vehicle does comprise a mixture of water and an organic solvent. The preferences for this in terms of types of organic solvents and amounts are as previously described with regard to the liquid medium.

Preferably, the ink comprises from 0.1 to 15, more preferably from 1 to 10 and especially from 3 to 10 percent by weight of the encapsulated carbon black pigment. Preferably, the ink contains no other kind of pigment, more preferably no other kind of colorant.

Preferably, the ink is an ink jet printing ink.

In the case of an ink jet printing ink, the ink preferably has a viscosity of less than 30mPa.s, more preferably less than 20mPa.s and especially less than 10mPa.s when measured at a temperature of 25°C.

In the case of an ink jet printing ink, it is preferred that the ink has a surface tension from 20 to 65 dynes/cm, more preferably from 25 to 50 dynes/cm when measured at a temperature of 25°C.

The ink jet printing ink may also comprise additional components suitable for use in ink jet printing inks, for example surfactants, viscosity modifiers, pH buffers (e.g. 1:9 citric acid/sodium citrate) corrosion inhibitors, biocides, dyes, water-miscible organic solvents and/or kogation reducing additives.

Preferably, the ink has been treated so as to remove any particulate matter having a particle size above 1 micron. This may be performed by filtration and/or centrifugation.

Preferably, the ink has been purified so as to remove low molecular weight salts and any remaining excess dispersant. Preferably, the purification is achieved by ultrafiltration, especially cross-flow ultrafiltration.

### Cartridge

According to a fourth aspect of the present invention there is provided an ink jet printer cartridge comprising a chamber and an ink according to the third aspect of the present invention wherein the ink is present in the chamber.

### Printer

According to a fifth aspect of the present invention there is provided an ink jet printer comprising a cartridge according to the fourth aspect of the present invention.

### Substrate

According to a sixth aspect of the present invention there is provided a substrate (especially a paper, a plastic film or a textile material) printed with an ink according to the third aspect of the present invention, preferably by means of an ink jet printer.

Preferred papers are plain or treated papers which may have an acid, alkaline or neutral character. Examples of commercially available papers include, Photo Paper Pro (PR101), Photo Paper Plus (PP101), Glossy Photo Paper (GP401), Semi Gloss Paper (SG101), Matte Photo Paper (MP101), (all available from Canon); Premium Glossy Photo Paper, Premium Semi gloss Photo Paper, ColorLife^{™}, Photo Paper, Photo Quality Glossy Paper, Double-sided Matte Paper, Matte Paper Heavyweight, Photo Quality Inkjet Paper, Bright White Inkjet Paper, Premium Plain Paper, (all available from Seiko Epson Corp); HP All-In-One Printing Paper, HP Everyday Inkjet Paper, HP Everyday Photo Paper Semiglossy, HP Office Paper, HP Photo Paper, HP Premium High-Gloss Film, HP Premium Paper, HP Premium Photo Paper, HP Premium Plus Photo Paper, HP Printing Paper, HP Superior Inkjet Paper, (all available from Hewlett Packard Inc.); Everyday Glossy Photo Paper, Premium Glossy Photo Paper, (both available from Lexmark Inc.); Matte Paper, Ultima Picture Paper, Premium Picture Paper, Picture Paper, Everyday Picture Paper (available from Kodak Inc.). The plastic film may be opaque or transparent. Transparent plastic films which are suitable for use as overhead projector slides, include for example polyesters (especially polyethylene terephthalate), polycarbonates, polyimides, polystyrenes, polyether sulphones, cellulose diacetate and cellulose triacetate films.

### Use

According to a seventh aspect of the present invention there is provided the use of the process according to the first aspect of the present invention for preparing an ink jet printing ink.

Preferably, an ink jet printing ink is prepared by a method comprising the steps of:
i) preparing an encapsulated carbon black according to the first aspect of the present invention; and then
ii) adding one or more additives selected from surfactants, viscosity modifiers, pH buffers, corrosion inhibitors, biocides, dyes, water-miscible organic solvents and/or kogation reducing additives.

The invention is further illustrated by the following Examples in which all parts and percentages are by weight unless otherwise stated.

### Examples

### Step 1: Preparation of Dispersant (1)

A monomer feed composition was prepared by mixing methacrylic acid (236.5 parts), methyl methacrylate (413.5 parts), 2-ethylhexyl methacrylate (350 parts) and isopropanol (375 parts). An initiator feed composition was prepared by mixing 2,2^{l}-azobis(2-methylbutyronitrile) (22.05 parts) and isopropanol (187.5 parts).

Isopropanol (187.5 parts) was heated to 80°C in a reactor vessel, continuously stirred and purged with a nitrogen gas atmosphere. The monomer feed and the initiator feed compositions were slowly fed into the reactor vessel whilst stirring the contents, maintaining the temperature at 80°C and maintaining the nitrogen atmosphere. The monomer feed and the initiator feed were both fed into the reactor over 2 hours. The reactor vessel contents were maintained at 80°C for a further 4 hours before cooling to 25°C. The resulting dispersant was then isolated from the reactor vessel contents by rotary evaporation under reduced pressure. This was designated as Dispersant (1). Dispersant (1), was an acrylic copolymer which had a number average molecular weight of about 12,000 an acid value of 154mg KOH/g.

### Step 2: Preparation of Dispersant solution (1)

Dispersant (1) (150 parts) was dissolved in water (470 parts) and neutralised with potassium hydroxide aqueous solution to give an aqueous solution having a pH of about 9. This resulted in Dispersant Solution (1) which contained approximately 24% by weight of Dispersant (1).

### Step 3: preparation of Mill-bases (1) to (3) and Comparative Mill-bases (1) and (2)

A carbon black pigment (Nipex^{™} 160IQ, 60 parts) was mixed and predispersed with Dispersant Solution (1) (100 parts) along with water (240 parts). The mixture was then milled in a Blackley mill for a period of 3 hours using spherical milling media. This resulted in a mill-base comprising Nipex^{™} 160IQ at a pigment content of about 15% by weight. The mill-base was then adjusted to a pigment content of about 10% by weight by adding water. This was designated Mill-base (1).

Mill-base (2) and Comparative Mill-bases (1), (2) and (3) were prepared in exactly the same way as Mill-base (1) except that the following carbon black pigments used were in place of Nipex^{™} 160IQ:
Nipex^{™} 170 IQ for Mill-base (2);
Nipex^{™} 150 for Comparative Mill-base (1);
Nipex^{™} 180 for Comparative Mill-base (2); and
Raven^{™} 1100 ultra for Comparative Mill-base (3).
The Nipex^{™} pigments were gas blacks obtained from Evonik/Degussa, they differ in the primary particle sizes and in their surface areas.
The Raven^{™} pigments were obtained from Columbian.

### Step 4: Preparation of Encapsulated carbon black pigments (1), (2) and Comparative Encapsulated carbon black pigments (1) to (8)

Encapsulated and Comparative Encapsulated carbon black pigments were prepared by first adding boric acid to the Mill-base or Comparative Mill-base. The amount of Boric acid added in all cases was 1.45 parts of a 6% by weight solution of boric acid in water.

Next, a cross-linking agent or a comparative cross-linking agent was added to the Mill-base or Comparative Mill-base and then the so formed cross-linking reaction mixture was heated to 65°C and maintained at that temperature for approximately 5 hours before cooling the mixture to 25°C.

The amounts of materials used in preparing each Encapsulated or Comparative Encapsulated carbon black pigment were as indicated in Table A below.

**Table A**

| Reference | Pigment | Mill-base/amount | Cross-linking agent/amount |
|---|---|---|---|
| Comparative Encapsulated carbon black pigment (1) | Nipex^{™} 150 | Comparative Mill-base (1)/50 parts | A/0.300 parts |
| Comparative Encapsulated carbon black pigment (2) | Nipex^{™} 150 | Comparative Mill-base (1)/50 parts | B/0.370 parts |
| Encapsulated carbon black pigment (1) | Nipex^{™} 160IQ | Mill-base (1)/50 parts | A/0.300 parts |
| Comparative Encapsulated carbon black pigment (3) | Nipex^{™} 160IQ | Mill-base (1)/50 parts | B/0.370 parts |
| Encapsulated carbon black pigment (2) | Nipex^{™} 170IQ | Mill-base (2)/50 parts | A/0.300parts |
| Comparative Encapsulated carbon black pigment (4) | Nipex^{™} 170IQ | Mill-base (2)/50 parts | B/0.370 parts |
| Comparative Encapsulated carbon black pigment (5) | Nipex^{™} 180IQ | Comparative Mill-base (2)/50 parts | A/0.300parts |
| Comparative Encapsulated carbon black pigment (6) | Nipex^{™} 180IQ | Comparative Mill-base (2)/50 parts | B/0.370 parts |
| Comparative Encapsulated carbon black pigment (7) | Raven^{™} Ultra 1100 | Comparative Mill-base (3)/50 parts | A/0.300 parts |
| Comparative Encapsulated carbon black pigment (8) | Raven^{™} Ultra 1100 | Comparative Mill-base (3)/50 parts | B/0.370 parts |

Cross-linking agent A was Dencaol^{™} EX521 a polyglycerol polyglycidyl ether. This a Cross-linking agent as used in the present invention.

Cross-linking agent B was polyethylene glycol diglycidyl ether from Aldrich (catalogue No 47,569-6). This is a comparative cross-linking agent.

The Encapsulated carbon blacks and the Comparative Encapsulated carbon blacks were prepared in the form of aqueous dispersions having a pigment content of about 10% by weight.

Each Encapsulated and Comparative Encapsulated carbon black pigment dispersion was then diluted to a pigment content of 5% by weight by the addition of water. The diluted pigment dispersions were then purified by microfiltration membrane washing using a 0.1 micron polyether sulfone membrane. Washing with pure water (diafiltration) was continued until the permeate was observed to have a constant conductivity. The pigment dispersions were then adjusted back to a pigment content of 10% by weight using the microfiltration membrane to concentrate the dispersion.

### Step 5: Preparation of Inks (1), (2) and Comparative inks (1) to (8)

Each of the Encapsulated and Comparative Encapsulated carbon black pigments as prepared above were used to prepare an Ink or Comparative ink with a corresponding Ink reference and having the following composition.

| | |
|---|---|
| (Comparative) Encapsulated carbon black as prepared in step 4 | 60.00 parts |
| 2-Pyrrolidone | 3.00 parts |
| Glycerol | 15.00 parts |
| 1,2 Hexane diol | 4.00 parts |
| Ethylene glycol | 5.00 parts |
| Surfynol^{™} 465 | 0.50 parts |
| Pure water | 12.50 parts |

### Surfynol^{™} 465 is a surfactant available from Airproducts.

Thus, Ink (1) contained Encapsulated carbon black pigment (1) whilst Comparative ink (3) contained Comparative Encapsulated carbon black pigment (3). In each case the amount of pigment in the ink was 60 x 10/100 = 6% by weight.

### Step 6: Filtration

Each of the Inks and Comparative Inks prepared in step 5 were filtered through a filter having a pore size of 1 micron.

### Step 7: Printing

Each of the Inks and Comparative Inks described above in Step 6 were printed onto different papers, namely HP All in one printing paper (colorlok) and Xerox 4200 paper. Printing was performed by means of an SEC D88 ink jet printer printing 100% blocks of black ink.

### Step 8: Reflectance Optical Density

For each print the reflectance optical density (ROD) was measured using a Gretag Macbeth key wizard V2.5 Spectrolino photodensitometer instrument, illuminated using a D65 light source at an observer angle of 2° and with no filter fitted. Measurements were taken at least two points along the print and were then averaged.

### Step 9: Results

**Table B**

| Ink ref | Cross-linking agent | Pigment | Pigment Primary particle size (nm) | Pigment surface area (m²/g) | ROD HP Colorlok | ROD Xerox 4200 |
|---|---|---|---|---|---|---|
| Comparative Ink (1) | A | Nipex^{™} 150 | 25 | 110 | 1.2 | 1.32 |
| Comparative Ink (2) | B | Nipex^{™} 150 | 25 | 110 | 1.21 | 1.34 |
| | | | | | | |
| Ink (1) | A | Nipex^{™} 160IQ | 20 | 150 | 1.22 | 1.3 |
| Comparative Ink (3) | B | Nipex^{™} 160IQ | 20 | 150 | 1.16 | 1.26 |
| | | | | | | |
| Ink (2) | A | Nipex^{™} 170IQ | 17 | 200 | 1.24 | 1.35 |
| Comparative Ink (4) | B | Nipex^{™} 170IQ | 17 | 200 | 1.11 | 1.22 |
| | | | | | | |
| Comparative Ink (5) | A | Nipex^{™} 180IQ | 15 | 260 | 1.13 | 1.23 |
| Comparative Ink (6) | B | Nipex^{™} 180IQ | 15 | 260 | 1.19 | 1.29 |
| | | | | | | |
| Comparative Ink (7) | A | Raven 1100 Ultra | 32 | 101 | 1.17 | 1.26 |
| Comparative Ink (8) | B | Raven 1100 Ultra | 32 | 101 | 1.16 | 1.25 |

| | | | | | | |
|---|---|---|---|---|---|---|
| A - is polyglycerol polyglycidyl ether (Denacol^{™} EX521) B - is polyethylene glycol diglycidyl ether (Aldrich Catalogue No 47,569-6) | | | | | | |

### Step 10: Commentary on Results

As can be seen in Table B only the inks prepared by the process of the present invention using the gas blacks Nipex^{™} 170IQ or 160IQ benefited from the use of the cross-linking agent Denacol^{™} EX521 to cross-link the dispersant in terms of ROD on paper. In addition the absolute RODs obtained from Nipex^{™} 170IQ when used in conjunction with DenaCol^{™} EX521 were measurably and visibly better than any other Ink or Comparative Ink. All of these finding were surprising to the inventors who can still only speculate as to why these unpredictable synergisms should exist.

### Step 11: Further inks

The further inks described in Tables I and II may be prepared wherein Mill-base (1) and Mill-base (2) are as defined above, but at a pigment content of 15% not 10% by weight and the ink additives are as defined below. Numbers quoted in the second column onwards refer to the number of parts of the relevant ingredient and all parts are by weight. The inks may be applied to paper by thermal, piezo or Memjet ink jet printing.

The following abbreviations are used in Table I and II:
PG = propylene glycol
DEG = diethylene glycol
NMP = N-methyl pyrrolidone
DMK = dimethylketone
IPA = isopropanol
MEOH = methanol
2P = 2-pyrrolidone
MIBK = methylisobutyl ketone
P12 = propane-1,2-diol
BDL = butane-2,3-diol
Surf = Surfynol^{™} 465 from Airproducts
PHO = Na₂HPO₄ and
TBT = tertiary butanol
TDG = thiodiglycol
GLY = Glycerol
nBDPG = mono-n-butyl ether of dipropylene glycol
nBDEG = mono-n-butyl ether of diethylene glycol
nBTEG = mono-n-butyl ether of triethylene glycol

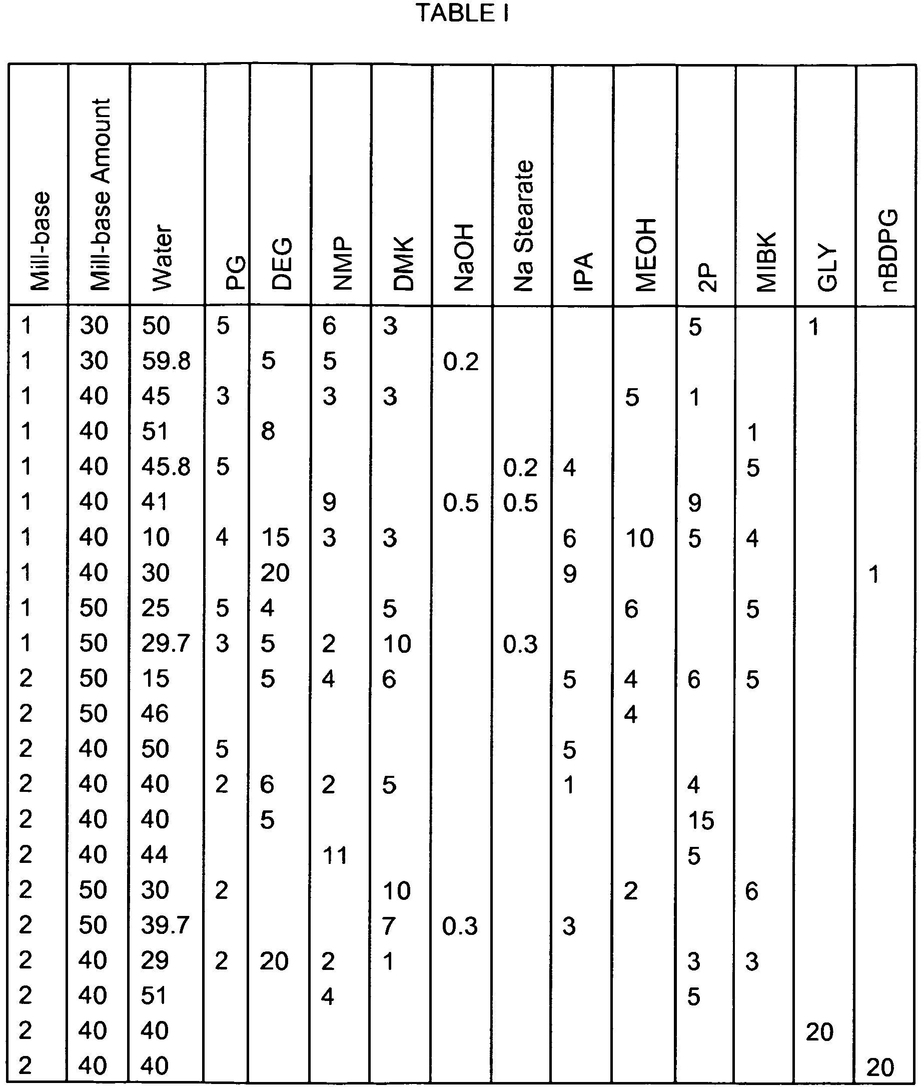

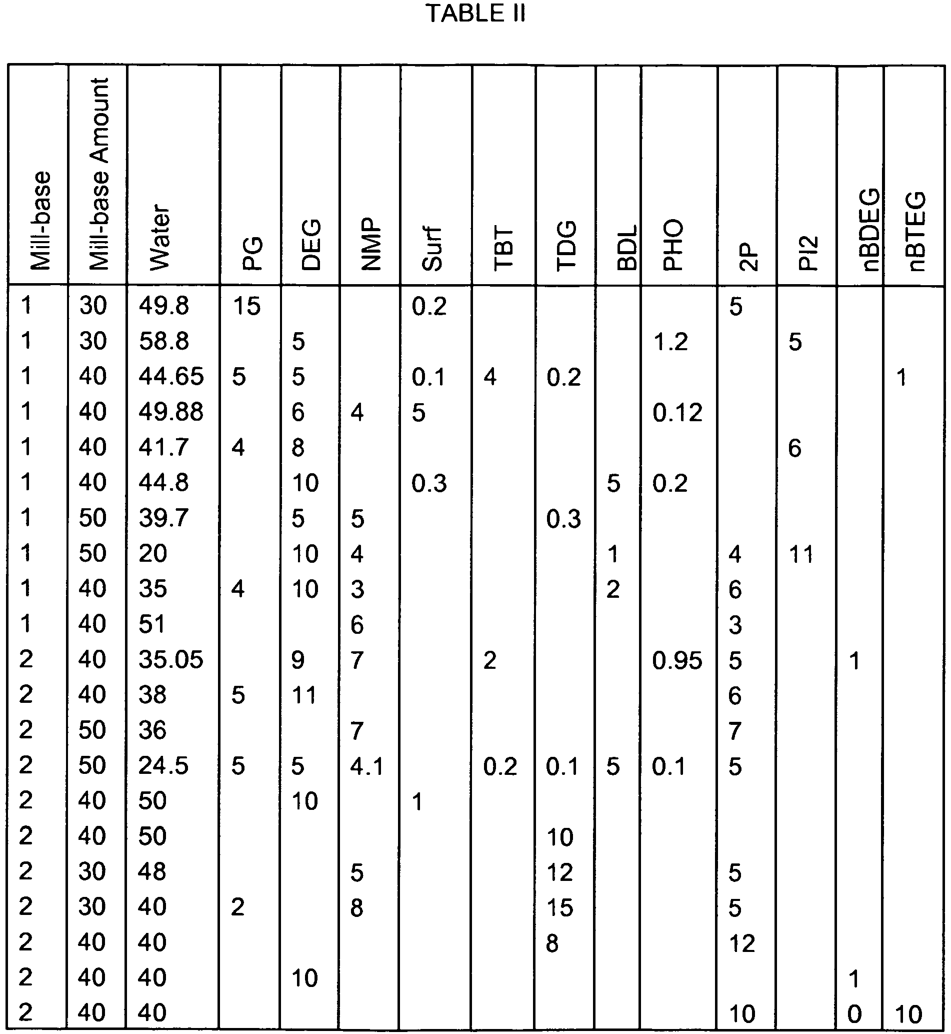

## Claims

1. A process for preparing an encapsulated carbon black pigment comprising cross-linking a dispersant with a cross-linking agent in the presence of a carbon black pigment and a liquid medium, thereby encapsulating the carbon black pigment within the cross-linked dispersant, wherein:
a) the dispersant has one or more cross-linkable groups selected from amine, hydroxy and carboxylic acid groups or salts thereof;
b) the cross-linking agent is polyglycerol polyglycidyl ether;
c) the carbon black pigment is a gas black which has an average primary particle size of from 16 to 22nm and a surface area of from 140 to 220m²/g.

2. A process according to claim 1 wherein the polyglycerol polyglycidyl ether has a weight averaged molecular weight of from 500 to 5,000.

3. A process according to claim 1 wherein the polyglycerol polyglycidyl ether has an effective epoxy content of 150 to 200g per mole of epoxy groups.

4. A process according to any one of the preceding claims wherein the polyglycerol polyglycidyl ether is completely soluble as a mixture of 10 parts of said polyglycerol polyglycidyl ether and 90 parts water at 25°C.

5. A process according to any one of the preceding claims wherein the dispersant is or comprises a polymer.

6. A process according to claim 5 wherein the polymeric dispersant comprises the repeat units from polymerising one or more ethylenically unsaturated monomers.

7. A process according to any one of the preceding claims wherein the carbon black pigment has a primary particle size of from 16 to 18nm.

8. A process according to any one of the preceding claims wherein the carbon black pigment has a surface area of from 180 to 220m²/g.

9. A process according to any one of the preceding claims wherein the carbon black pigment has a surface area of from 190 to 210m²/g.

10. An encapsulated carbon black pigment obtainable by the process according to any one of the preceding claims.

11. An ink comprising an encapsulated carbon black pigment according to claim 10 and a liquid vehicle.

12. An ink jet printer cartridge comprising a chamber and an ink according to claim 11 wherein the ink is present in the chamber.

13. An ink jet printer comprising an ink jet printer cartridge according to claim 12.

14. A substrate printed with an ink according to claim 11.

15. Use of the process according to any one of claims 1 to 9 for preparing an ink jet printing ink.

## Patentansprüche

1. Verfahren zur Herstellung eines verkapselten Rußpigments, bei dem man ein Dispergiermittel in Gegenwart eines Rußpigments und eines flüssigen Mediums mit einem Vernetzungsmittel vernetzt, wodurch das Rußpigment in dem vernetzten Dispergiermittel verkapselt wird, wobei:
a) das Dispergiermittel eine oder mehrere vernetzbare Gruppen, die aus Amin-, Hydroxy- und Carbonsäuregruppen oder Salzen davon ausgewählt sind, aufweist;
b) es sich bei dem Vernetzungsmittel um Polyglycerinpolyglycidylether handelt;
c) es sich bei dem Rußpigment um einen Gasruß mit einer durchschnittlichen Primärteilchengröße von 16 bis 22 nm und einer Oberfläche von 140 bis 220 m²/g handelt.

2. Verfahren nach Anspruch 1, bei dem der Polyglycerinpolyglycidylether ein gewichtsmittleres Molekulargewicht von 500 bis 5000 aufweist.

3. Verfahren nach Anspruch 1, bei dem der Polyglycerinpolyglycidylether einen effektiven Epoxidgruppengehalt von 150 bis 200 g pro Mol Epoxidgruppen aufweist.

4. Verfahren nach einem der vorhergehenden Ansprüche, bei dem der Polyglycerinpolyglycidylether als Mischung von 10 Teilen des Polyglycerinpolyglycidylethers und 90 Teilen Wasser bei 25°C vollständig löslich ist.

5. Verfahren nach einem der vorhergehenden Ansprüche, bei dem das Dispergiermittel ein Polymer ist oder umfasst.

6. Verfahren nach Anspruch 5, bei dem das polymere Dispergiermittel die Wiederholungseinheiten aus der Polymerisation eines oder mehrerer ethylenisch ungesättigter Monomere umfasst.

7. Verfahren nach einem der vorhergehenden Ansprüche, bei dem das Rußpigment eine Primärteilchengröße von 16 bis 18 nm aufweist.

8. Verfahren nach einem der vorhergehenden Ansprüche, bei dem das Rußpigment eine Oberfläche von 180 bis 220 m²/g aufweist.

9. Verfahren nach einem der vorhergehenden Ansprüche, bei dem das Rußpigment eine Oberfläche von 190 bis 210 m²/g aufweist.

10. Verkapseltes Rußpigment, das durch das Verfahren nach einem der vorhergehenden Ansprüche erhältlich ist.

11. Tinte, umfassend ein verkapseltes Rußpigment nach Anspruch 10 und einen flüssigen Träger.

12. Tintenstrahldruckerpatrone mit einer Kammer und einer Tinte nach Anspruch 11, wobei sich die Tinte in der Kammer befindet.

13. Tintenstrahldrucker mit einer Tintenstrahldruckerpatrone nach Anspruch 12.

14. Substrat, bedruckt mit einer Tinte nach Anspruch 11.

15. Verwendung des Verfahren nach einem der Ansprüche 1 bis 9 zur Herstellung einer Tintenstrahldrucktinte.

## Revendications

1. Procédé de préparation d'un pigment noir de carbone encapsulé comprenant la réticulation d'un dispersant avec un agent de réticulation en présence d'un pigment noir de carbone et d'un milieu liquide, de façon à encapsuler le pigment noir de carbone dans le dispersant réticulé, dans lequel :
a) le dispersant a un ou plusieurs groupes réticulables choisis parmi les groupes amine, hydroxyle et acide carboxylique ou les sels de ceux-ci ;
b) l'agent de réticulation est le polyglycérol polyglycidyl éther ;
c) le pigment noir de carbone est du noir de gaz qui a une taille de particules primaires moyenne de 16 à 22 nm et une surface spécifique de 140 à 220 m²/g.

2. Procédé selon la revendication 1 dans lequel le polyglycérol polyglycidyl éther a une masse moléculaire moyenne en poids de 500 à 5 000.

3. Procédé selon la revendication 1 dans lequel le polyglycérol polyglycidyl éther a une teneur en groupes époxy efficaces de 150 à 200 g par mole de groupes époxy.

4. Procédé selon l'une quelconque des revendications précédentes dans lequel le polyglycérol polyglycidyl éther est complètement soluble en mélange de 10 parties dudit polyglycérol polyglycidyl éther et de 90 parties d'eau à 25°C.

5. Procédé selon l'une quelconque des revendications précédentes dans lequel le dispersant est ou comprend un polymère.

6. Procédé selon la revendication 5 dans lequel le dispersant polymère comprend les motifs récurrents tirés de la polymérisation d'un ou plusieurs monomères à insaturation éthylénique.

7. Procédé selon l'une quelconque des revendications précédentes dans lequel le pigment noir de carbone a une taille de particules primaires de 16 à 18 nm.

8. Procédé selon l'une quelconque des revendications précédentes dans lequel le pigment noir de carbone a une surface spécifique de 180 à 220 m²/g.

9. Procédé selon l'une quelconque des revendications précédentes dans lequel le pigment noir de carbone a une surface spécifique de 190 à 210 m²/g.

10. Pigment noir de carbone encapsulé susceptible d'être obtenu par le procédé selon l'une quelconque des revendications précédentes.

11. Encre comprenant un pigment noir de carbone encapsulé selon la revendication 10 et un véhicule liquide.

12. Cartouche d'impression à jet d'encre comprenant une chambre et une encre selon la revendication 11 dans laquelle l'encre est présente dans la chambre.

13. Imprimante à jet d'encre comprenant une cartouche d'impression à jet d'encre selon la revendication 12.

14. Support imprimé avec une encre selon la revendication 11.

15. Utilisation du procédé selon l'une quelconque des revendications 1 à 9 pour la préparation d'une encre d'impression à jet d'encre.
